# NEUE EUROPÄISCHE PATENTSCHRIFT

(11) **EP 0 159 724 B2**
(45) Veröffentlichungstag und Bekanntmachung des Hinweises auf die Entscheidung über den Einspruch: **07.01.1998**
(45) Hinweis auf die Patenterteilung: 03.07.1991
(21) Anmeldenummer: 85105153.2
(22) Anmeldetag: 26.04.1985
(51) Int. Cl.: A23F 3/36

(54) **Verfahren zur Herstellung von entkoffeiniertem Tee**
Process for preparing decaffeinated tea
Procédé de préparation de thé décaféiné

(30) Priorität: 27.04.1984 DE 3415844
(43) Veröffentlichungstag der Anmeldung: 30.10.1985
(73) Patentinhaber: SKW Trostberg Aktiengesellschaft, 83308 Trostberg (DE)
(72) Erfinder: Schütz, Erwin, Dr., D-8221 Palling (DE); Vollbrecht, Heinz-Rüdiger, Dr., D-8221 Stein/Traun (DE); Klima, Hubertus, D-8221 Tacherting (DE)
(74) Vertreter: Weickmann, Heinrich, Dipl.-Ing.

(56) Entgegenhaltungen:
- EP-A- 0 140 061
- EP-A- 0 167 399
- DE-A- 2 637 197
- DE-A- 3 414 767
- DE-C- 608 245
- DE-C- 2 005 293
- DE-C- 2 119 678
- DE-C- 2 127 642
- DE-C- 2 212 281
- FR-A- 2 079 261
- FR-A- 2 140 098
- FR-A- 2 361 824
- GB-A- 1 417 649

## Beschreibung

Die Erfindung betrifft ein Verfahren zur Herstellung von entkoffeiniertem schwarzem Tee.

Es sind bereits verschiedene Methoden zur Entkoffeinierung von Tee bekannt geworden. Während bei der Entkoffeinierung von Kaffee von Rohbohnen ausgegangen werden kann, muß bei der Entkoffeinierung von Tee von einem fermentierten Produkt ausgegangen werden, welches hinsichtlich des Aromas sehr kritisch ist und bei der Entfernung des Koffeins in der Regel erheblich beeinträchtigt wird.

So sind verschiedene Verfahren zur Entkoffeinierung unter Verwendung von organischen Lösungsmitteln beschrieben worden, die jedoch sämtlich den Nachteil haben, daß erhebliche Teile des Aromas ebenfalls entfernt werden und eine rückstandslose Entfernung des Lösungsmittels aus dem Tee schwierig ist.

In der DE-AS 21 27 642 wird bereits ein Verfahren zur Entkoffeinierung von Tee beschrieben, bei welchem in einem ersten Verfahrensschritt mit trockenem überkritischen CO₂ dem trockenen Tee die Aromastoffe entzogen werden, anschließend in einem zweiten Schritt mit feuchtem überkritischen CO₂ selektiv das Koffein extrahiert wird und nach Rücktrocknung des Tees das im ersten Extraktionsschritt abgetrennte Aroma wieder aufimprägniert wird. Dabei soll die Extraktion bei 40 bis 60°C erfolgen, um das Aroma nicht zu schädigen und erst nach Aromaentfernung eine höhere Temperatur angewendet werden. Die Koffeinextraktion soll bei 200 bis 250 bar durchgeführt werden. Die Koffeinabscheidung aus dem CO₂ erfolgt dann durch Absenken von Temperatur und Druck unter den kritischen Bereich.

Ein wesentlicher Nachteil dieses Verfahrens ist darin zu sehen, daß man zuerst das Aroma unter möglichst milden Bedingungen extrahieren muß, ehe man unter etwas schärferen Temperaturbedingungen in einer zweiten gesonderten Stufe das Koffein entziehen kann. Ein weiterer Nachteil des Verfahrens besteht in der aufwendigen zweistufigen Arbeitsweise. Schließlich ist auch die Abscheidung des Koffeins durch Druckentspannung und Temperatursenkung aufwendig, da man anschließend erhebliche Energie aufwenden muß um das CO₂ wieder in den überkritischen Bereich zu bringen.

Man hat bereits versucht, diesen letzteren Nachteil gemäß DE-PS 26 37 197 dadurch zu überwinden, daß man dem CO₂ das Koffein im überkritischen Druckbereich mit Ionenaustauschern entzieht. Die bekannte zweistufige Extraktion des Tees wurde jedoch unverändert beibehalten, wobei die Bedingungen 40°C und 200 bar waren.

Der Erfindung liegt daher die Aufgabe zugrunde, ein wesentlich einfacheres einstufiges Verfahren zur Herstellung von entkoffeiniertem Tee zu schaffen, welches selektiv das Koffein alleine extrahiert, ohne die Aromastoffe mitzuextrahieren und keinen Wechsel zwischen überkritischen und unterkritischen Temperatur- und Druckbedingungen beim Extraktionsmittel CO₂ erfordert.

Diese Aufgabe wird erfindungsgemäß gelöst durch ein Verfahren zur Herstellung von entkoffeiniertem Tee durch Extraktion mit hinsichtlich Druck und Temperatur überkritischem CO₂ in Gegenwart von Wasser, welches dadurch gekennzeichnet ist, daß man die Extraktion einstufig mit feuchtem CO₂ bei 260 bis 350 bar und 50 bis 70°C, vorzugsweise 60 bis 70°C durchführt, dem coffeinhaltigen CO₂ mit Aktivkohle im angegebenen Druckbereich das Koffein wieder entzieht und das so erhaltene koffeinfreie CO₂ über den entkoffeinierten Tee recyclisiert, letzteren austrägt und trocknet.

Die Erfindung beruht auf der überraschenden Erkenntnis, daß es unter den vorstehend angegebenen Druck- und Temperaturbedingungen bei Einhaltung eines bestimmten Feuchtigkeitsgehaltes im Tee möglich ist, selektiv praktisch nur das Koffein zu extrahieren und so die gesonderte Extraktion der Aromastoffe und die Rückimprägnierung des entkoffeinierten Tees mit denselben überflüssig wird. Überraschenderweise wird dabei trotz der angewandten hohen Temperaturen praktisch keine wesentliche Veränderung der empfindlichen Aromastoffe bewirkt und der Tee behält seinen natürlichen Geschmack und sein natürliches Aroma weitgehend bei. Aufgrund dieser selektiven Extraktion ist es daher auch möglich, anstelle von Ionenaustauschern billige Aktivkohle zur Entfernung des extrahierten Koffeins aus dem CO₂ zu verwenden, obwohl in der DE-PS 26 37 197 von der Verwendung von Aktivkohle wegen ihrer nicht ausreichenden Selektivität abgeraten wird.

Für das erfindungsgemäße Verfahren setzt man in der Regel üblichen getrockneten Tee an, der vorher durch Wasserzusatz auf den angegebenen Feuchtigkeitsgehalt von 15 bis 50 Gew.-% gebracht wird. Die Einstellung des Feuchtigkeitsgehalts läßt sich ganz einfach durch Zusatz der jeweils erforderlichen Wassermenge zum trockenen Tee in einer geeigneten Mischvorrichtung und Mischung bis zur gleichmäßigen Verteilung der Feuchtigkeit erzielen. Vorzugsweise stellt man den Tee auf 25 bis 40 Gew.-% Wasser ein, die besten Ergebnisse werden bei 28 bis 35 Gew.-% erhalten.

Das CO₂ wird wie erwähnt unter überkritischen Bedingungen in feuchtem Zustand eingesetzt. Der Druck muß, wie erwähnt, zwischen 260 und 350 bar, vorzugsweise zwischen 260 und 300 bar, liegen. Besonders bevorzugt wird ein Druck zwischen 270 und 290 bar angewendet. Der angegebene Temperaturbereich von 50 bis 70°C ist kritisch. Unterschreitet man die Untergrenze von 50°C, so sinkt die extrahierte Koffeinmenge drastisch und das Verfahren arbeitet dann wesentlich unwirtschaftlicher und erfordert erheblich verlängerte Extraktionszeiten. Bei Überschreitung der Obergrenze von 70°C treten unerwünschte Aromaveränderungen ein.

Die einzusetzende CO₂-Menge hängt von der Menge des zu extrahierenden Koffeins im Tee ab. Da unter den angegebenen Druck- und Temperaturbedingungen etwa 0,2 g Koffein pro kg CO₂ aufgenommen werden können, wendet man zweckmäßig etwa 2 bis 20 kg CO₂, vorzugsweise etwa 5 bis 10 kg CO₂ je Gramm zu extrahierenden Koffein im Tee an.

Nach der Extraktion, die im allgemeinen zwischen etwa 2 und 10 Stunden dauert, führt man das mit dem Koffein beladene CO₂ unter Aufrechterhaltung der Druck- und Temperaturbedingungen im angegebenen Bereich in Kontakt mit Aktivkohle, zweckmäßig in Form einer Aktivkohleschüttung. Dabei geht das Koffein in die Aktivkohle über. Das entkoffeinierte CO₂ wird anschließend wieder unter Extraktionsdruck recyclisiert zum bereits extrahierten Tee und führt diesem dabei etwa wieder dieselbe Menge Feuchtigkeit zu, die bei der Extraktion vorher entfernt wurde. Das Verfahren wird dabei zweckmäßig unter Verwendung mehrerer Extraktionsautoklaven durchgeführt, die in Serie oder parallel geschaltet sein können und einzeln aus dem Verfahrenszyklus abtrennbar sind. Nach Beendigung der Recyclisierung erhält man so einen feuchten Tee mit stark vermindertem Koffeingehalt und praktisch unverändertem Aromastoffgehalt. Dieser Tee wird noch getrocknet, zweckmäßig bei Temperaturen zwischen 60 und 80°C und kann dann unmittelbar verwendet werden.

Bei der Adsorption des Koffeins an die Aktivkohle wird zweckmäßig eine Temperatur von 50°C bis 70°C eingehalten. Die Recyclisierung des CO₂ zum bereits extrahierten Tee unter Rückfeuchtung desselben erfolgt zweckmäßig im Temperaturbereich von 50°C bis 70°C, vorzugsweise von 60°C bis 70°C.

Die Extraktion des Tees kann in einem üblichen Autoklaven durchgeführt werden, welcher mit Tee gefüllt und dann in der Längsachse vom CO₂ durchströmt wird. Ein derartiger Extraktionsautoklav weist zweckmäßigerweise Zylinderform auf und kann typischerweise ein Längenzu DurchmesserVerhältnis von etwa 3:1 bis 8:1 aufweisen. Derartige Extraktionsautoklaven sind einfach aufgebaut und lassen sich durch einen abnehmbaren Deckel leicht mit dem Extraktionsgut beschicken.

Es wurde nun gefunden, daß bei einem derartig aufgebauten Extraktionsautoklaven häufig eine unerwünschte Verfestigung des Füllgutes auftritt. Die Ursache hierfür liegt darin, daß bei Tee, wie auch bei den meisten anderen Naturstoffen, aufgrund ihrer Partikelform, hohe Kohäsivität vorliegt. Hinzu kommen Verfahrensparameter wie Feuchtegrad, CO₂-Volumenstrom, Aufdrückgeschwindigkeit und Änderungsgeschwindigkeit beim Volumenstrom, Autoklavhöhe und Filterfläche am Autoklavenausgang, welche eine Verfestigungsneigung bedingen.

Bei Einsetzen der Verfestigung des Schüttguts wird der Druckverlust beim Durchströmen der Schüttung erhöht, was zu einer weiteren Verfestigung führt. Als Folge davon tritt eine Kanalbildung auf, die wiederum Inhomogenitäten des auf Autoklavenquerschnitt und -höhe bezogenen Extraktionsgrades bewirkt. Dies kann zu einer wesentlichen Verlängerung der erforderlichen Extraktionszeiten führen.

Diese Nachteile lassen sich gemäß einer bevorzugten Ausführungsform der Erfindung dadurch beseitigen, daß man das zu extrahierende Gut, also den Tee, in Form eines Hohlzylinders anordnet und die Extraktion konzentrisch durchführt, indem man das unbeladene CO₂ von einer Zylinderoberfläche her zuführt und hinter der anderen Zylinderoberfläche das beladene CO₂ sammelt und von dort der Aktivkohle zuführt. Besonders zweckmäßig erfolgt dabei die Zufuhr des CO₂ von der äußeren Zylinderoberfläche her. Bei einer entsprechenden Gestaltung des Hohlzylinders ergibt sich hierdurch auch die Möglichkeit, die Aktivkohle im inneren Hohlraum des Hohlzylinders anzuordnen, wodurch sich besonders günstige Strömungsverhältnisse ergeben.

Nach dieser bevorzugten Radial-Strömungsmethode ändert sich der durchströmte Querschnitt auf dem Weg von einer Oberfläche des Hohlzylinders zur anderen Oberfläche ständig, gleichgültig, in welcher Richtung die Durchströmung erfolgt. Bei der besonders bevorzugten Ausführungsform mit Durchströmung von außen nach innen ist im Vergleich zur üblichen axialen Durchströmung eines zylinderförmigen Extraktionsautoklaven die beaufschlagte Schüttgut-Mantelfläche 15- bis 20 mal größer, am Ende bei Erreichen des Innenhohlraums etwa fünfmal größer je nach Durchmesser des inneren Hohlraums. Entsprechend niedrig sind auch die Leerrohr- wie die Kanalgeschwindigkeiten zwischen benachbarten Teilchen. Bei unveränderter mittlerer Verweilzeit innerhalb des Autoklaven wird daher die Kontaktdauer an einem individuell betrachteten Partikel deutlich erhöht.

Ebenfalls wird die mechanische Beanspruchung der Schüttung bei dieser Ausführungsform wesentlich reduziert. Der Druckverlust hängt bekanntlich quadratisch von der Leerrohrgeschwindigkeit ab und ist direkt proportional zur Laufstrecke des Fluids. Bei der Radialstrom-Extraktionsmethode beträgt daher die Laufstrecke des CO₂ nur etwa 1/10 der Laufstrecke bei axialer Durchströmung des Autoklaven. Daher werden Verpressungen des Schüttgutes vermieden.

Die besonders bevorzugte Ausführungsform der Extraktion mit Radialströmung bei Zufuhr des Extraktionsfluids vom äußeren Hohlzylindermantel her hat zudem den Vorteil, daß im hohen Innenraum des Hohlzylinders die Aktivkohle angeordnet werden kann. Hierdurch werden Druckverluste in Rohrleitungen zwischen Extraktionsautoklaven und Abscheideautoklaven vermieden und eine besonders vorteilhafte Betriebsweise ermöglicht.

Eine enfindungsgemäße Vorrichtung zur Durchführung des Radialextraktionsverfahrens gemäß der Erfindung weist daher einen zylindrischen Autoklaven 1, eine Extraktionsmittelzuführung 2, einen Deckel 3 und einen Extraktionsmittelabzug 4 auf und ist gekennzeichnet durch einen in den Autoklaven eingesetzten zylindrischen Extraktionsgutbehälter 5 mit perforiertem Mantel 6 und einem in der Zylinderachse angeordneten perforierten Extraktionsmittel-Sammelzylinder 7, der mit dem Extraktionsmittelabzug 4 in Strömungsverbindung steht. Der perforierte Extraktionsmittel-Sammelzylinder 7 kann rohrförmig ausgebildet sein. Dies ist insbesondere dann zweckmäßig, wenn das Extraktionsfluid gesammelt und direkt aus dem Extraktionsautoklaven über den Extraktionsmittelabzug 4 einem gesonderten Abscheideautoklaven mit Aktivkohlefüllung zugeführt werden soll. Gemäß einer besonderen Ausführungsform der erfindungsgemäßen Vorrichtung weist der Extraktionsmittel-Sammelzylinder 7 jedoch eine Aktivkohlefüllung auf und ein gesonderter Abscheideautoklav wird hierdurch überflüssig gemacht.

Bei der erfindungsgemäßen Vorrichtung erhält man eine gleichmäßige Anströmung der zu extrahierenden Schüttung.

Der Extraktionsgutbehälter 5 kann im Autoklaven 1 fest angeordnet oder herausziehbar ausgeführt sein. Je nachdem erfolgt die Beschickung mit dem zu extrahierenden Gut im zylindrischen Autoklav oder auch nach Entnahme des Extraktionsgutbehälters außerhalb davon. Der Extraktionsmittel-Sammelzylinder 7 ist zweckmäßig so ausgeführt, daß er bei Füllung mit dem Schüttgut aus der Vorrichtung gezogen werden kann. Dies erleichtert das Entleeren des Schüttgutes. Vor erneuter Befüllung wird dann das Rohr wieder eingesetzt. Der Sammelzylinder kann jedoch auch fest installiert sein.

Die erfindungsgemäße Ausführungsform von Verfahren und Vorrichtung mit radialer Durchströmung des Extraktionsgutes eignet sich prinzipiell für beliebige Schüttgüter, die der Hochdruckextraktion mit einem Extraktionsmittel wie CO₂ unterzogen werden sollen.

Im folgenden Beispiel wird die Erfindung näher erläutert in Verbindung mit der beigefügten Zeichnung. In dieser stellen dar:

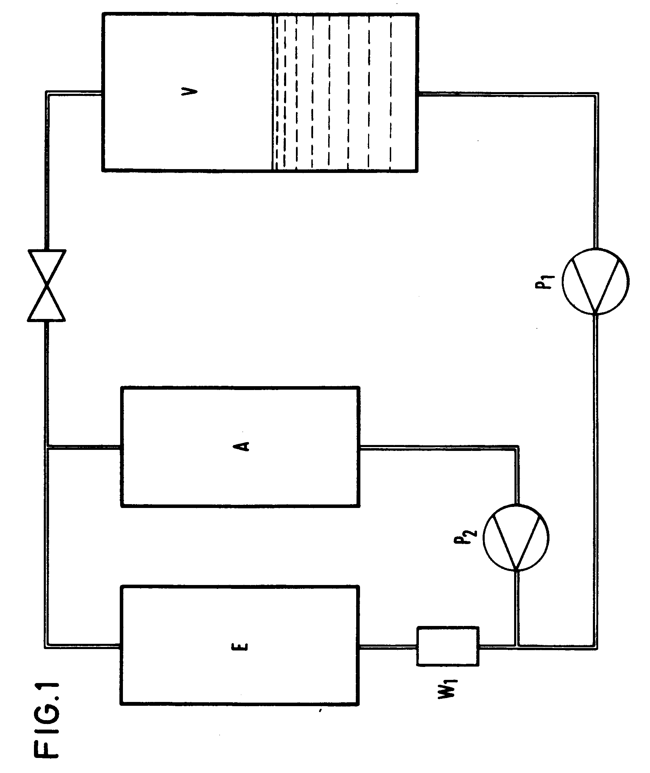

- Fig. 1: eine schematische Darstellung einer erfindungsgemäßen Anlage, wie im Beispiel näher erläutert.

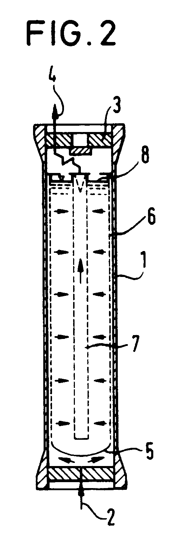

- Fig. 2: eine Darstellung eines Extraktionsautoklaven mit radialer Durchströmung gemäß der Erfindung.

Die Erfindung ist nach den Ansprüchen 1-15 auszuführen.

### Beispiel

10 kg eines Tees der Sorte Ceylon-Blends mit 5.9 % H₂O und 3,3 % Koffein werden mit 3,5 Litern H₂O in einer Mischapparatur befeuchtet und anschließend in den Extraktionsautoklaven (E) eingefüllt. Der Adsorber (A) wird mit 7 kg Aktivkohle beschickt. Extraktionsautoklav und Absorber werden mit CO₂ aus einem Flüssigkeitstank (V) mit Hilfe der Pumpe P1 auf einen Druck von 200 bar gebracht, wonach die Pumpe aus dem Kreislauf genommen wird. Nach Einschalten der Pumpe P2 wird CO₂ über den Extraktionsautoklaven und den Absorber umgewälzt, wobei die Temperatur im Extraktionsautoklav durch den Wärmeaustauscher W1 auf 63°C erhöht wird. Der Druck im Extraktionsautoklav beträgt 290 bar. Der Absorber wird bei einem Druck von 280 bar und einer Temperatur von 61°C betrieben. Nach 2,5 Stunden wird die Extraktion abgebrochen, das CO₂ des Extraktionsautoklaven bis zum Druckausgleich in das CO₂-Vorratsgefäß und danach an die Atmosphäre abgelassen. Der Tee wird dem Extraktionsautoklav entnommen und in einem Trocknerbei 70°C getrocknet. Die Anlage ergibt eine Restfeuchte von 4,5 % H₂O und 0,08 % Koffein.

## Patentansprüche

1. Einstufiges Verfahren zur Herstellung von entkoffeiniertem Tee durch Extraktion mit hinsichtlich Druck und Temperatur überkritischem CO₂ in Gegenwart von Wasser, **dadurch gekennzeichnet,** daß man mit feuchtem CO₂ bei 260 bis 350 bar zuerst einen auf 15 bis 50 Gew.-% H₂O-Gehalt eingestellten Tee bei 50 bis 70°C extrahiert, dann dem koffeinhaltigen CO₂ im gleichen Druckbereich mit Aktivkohle das Koffein wieder entzieht und danach das koffeinfreie CO₂ über den bereits extrahieren Tee recyclisiert, den Tee vom CO₂ trennt und trocknet.

2. Verfahren nach Anspruch 1, **dadurch gekennzeichnet**, daß man den Tee vor der Extraktion auf 20 bis 40 Gew.-% H₂O einstellt.

3. Verfahren nach Anspruch 2, **dadurch gekennzeichnet**, daß man den Tee vor der Extraktion auf 28 bis 35 Gew.-% H₂O einstellt.

4. Verfahren nach Anspruch 1, **dadurch gekennzeichnet**, daß man das CO₂ bei 260 bis 300 bar hält.

5. Verfahren nach Anspruch 4, **dadurch gekennzeichnet**, daß man das CO₂ bei 270 bis 290 bar hält.

6. Verfahren nach Anspruch 1, dadurch **gekennzeichnet**, daß man die Extraktion bei einer Temperatur von 60 bis 70°C durchführt.

7. Verfahren nach Anspruch 1, **dadurch gekennzeichnet**, daß man 2 bis 20 kg CO₂ je Gramm zu extrahierendem Koffein im Tee anwendet.

8. Verfahren nach Anspruch 7, **dadurch gekennzeichnet**, daß man 3 bis 10 kg CO₂ je Gramm zu extrahierendem Koffein im Tee anwendet.

9. Verfahren nach einem der vorhergehenden Ansprüche, **dadurch gekennzeichnet**, daß man den Tee in Form eines Hohlzylinders anordnet und die Extraktion konzentrisch durchführt, indem man das unbeladene CO₂ von einer Zylinderoberfläche her zuführt und hinter der gegenüberliegenden Zylinderoberfläche das beladene CO₂ sammelt und zur Aktivkohle führt.

10. Verfahren nach Anspruch 9, **dadurch gekennzeichnet**, daß man das CO₂ von der äußeren Zylinderoberfläche her zuführt und im Zylinderhohlraum sammelt.

11. Verfahren nach Anspruch 10, **dadurch gekennzeichnet**, daß man die Aktivkohle im Innenraum des Hohlzylinders anordnet.

12. Verwendung einer Vorrichtung ,
**gekennzeichnet durch**
einen zylindrischen Autoklaven (1) mit einer Extrakionsmittelzuführung (2), einem Deckel (3) und einem Extraktionsmittelabzug (4), gekennzeichnet durch einen in den Autoklaven eingesetzten zylindrischen Extraktionsgutbehälter (5) mit perforiertem Mantel (6) und einem in der Zylinderachse angeordneten perforierten Extraktionsmittel-Sammelzylinder (7), der mit dem Extraktionsmittelabzug (4) in Strömungsverbindung steht, zur Durchführung des Verfahrens nach den Ansprüchen 1 bis 11.

13. Verwendung nach Anspruch 12,
**dadurch gekennzeichnet,**
daß der perforierte Extraktionsmittel-Sammelzylinder (7) rohrförmig ausgebildet ist.

14. Verwendung nach Anspruch 12 oder 13,
**dadurch gekennzeichnet,**
daß der Extraktionsmittel-Sammelzylinder (7) eine Aktivkohlefüllung aufweist.

15. Verwendung nach einem der Ansprüche 12 bis 14,
**dadurch gekennzeichnet,**
daß der Extraktionsgutbehälter (5) einen ringförmigen Deckel (8) aufweist, durch den sich der Extraktionsmittel-Sammelzylinder (7) erstreckt.

## Claims

1. Single-stage process for the production of decaffeinated tea by extraction with CO₂, supercritical with regard to pressure and temperature, in the presence of water, characterized in that one first extracts tea, adjusted to a 15 to 50 % by weight H₂O content, at 50 to 70°C with moist CO₂ at 260 to 350 bar, then removes the caffein from the caffein-containing CO₂ in the same pressure range with activated carbon and thereafter recycles the caffein-free CO₂ over the already extracted tea, separates the tea from the CO₂ and dries.

2. Process according to Claim 1, characterised in that, before the extraction, one adjusts the tea to 20 to 40 % by weight H₂O.

3. Process according to Claim 2, characterised in that, before extraction, one adjust the tea to 28 to 35 % by weight H₂O.

4. Process according to Claim 1, characterised in that one maintains the CO₂ at 260 to 300 bar.

5. Process according to Claim 4, characterised in that one maintains the CO₂ at 270 to 290 bar.

6. Process according to Claim 1, characterised in that one carries out the extraction at a temperature of 60 to 70°C.

7. Process according to Claim 1, characterised in that one uses 2 to 20 kg of CO₂ per gram of caffein to be extracted in the tea.

8. Process according to Claim 7, characterised in that one uses 3 to 10 kg of CO₂ per gram of caffein to be extracted in the tea.

9. Process according to any one of the preceding Claims, characterised in that one arranges the tea in the form of a hollow cylinder and carries out the extraction concentrically in that one introduces the unloaded CO₂ from one cylinder surface and collects the loaded CO₂ behind the opposite cylinder surface and passes it to the activated carbon.

10. Process according to Claim 9, characterised in that one introduces the CO₂ from the outer cylindrical surface and collects it in the hollow chamber of the cylinder.

11. Process according to Claim 10, characterised in that one arranges the activated carbon in the inner chamber of the hollow cylinder.

12. Use of a device, characterised by a cylindrical autoclave (1) with an extraction agent inlet (2), a lid (3) and an extraction agent removal means (4), characterised by a cylindrical extraction material container (5) with a perforated mantle (6) placed in the autoclave and a perforated extraction agent collection cylinder (7) arranged on the cylinder axis, which is in flow connection with the extraction agent removal means (4), for carrying out the process according to Claims 1 to 11.

13. Use according to Claim 12, characterised in that the perforated extraction agent collection cylinder (7) is constructed in the form of a pipe.

14. Use according to Claim 12 or 13, characterised in that the extraction agent collection cylinder (7) has an activated carbon filling.

15. Use according to any one of Claims 12 to 14, characterised in that the extraction material container (5) has a ring-shaped lid (8) through which extends the extraction agent collection cylinder (7).

## Revendications

1. Procédé en une seule étape pour la préparation de thé décaféiné par extraction, en présence d'eau, avec du CO₂ surcritique en ce qui concerne la pression et la température, caractérisé en ce que l'on extrait tout d'abord entre 50 et 70°C un thé ajusté à une teneur en H₂O de 15 à 50 % en poids avec du CO₂ humide sous 260 à 350 mbars, retire ensuite à nouveau la caféine du CO₂ contenant la caféine avec du charbon actif dans le même domaine de pression et recycle après cela le CO₂ débarrassé de la caféine au-dessus du thé déjà extrait, sépare le thé du CO₂ et le sèche.

2. Procédé selon la revendication 1, caractérisé en ce qu'on ajuste le thé avant l'extraction entre 20 et 40 % en poids d'H₂O.

3. Procédé selon la revendication 2, caractérisé en ce qu'on ajuste le thé avant l'extraction entre 28 et 35 % en poids d'H₂O.

4. Procédé selon la revendication 1, caractérisé en ce qu'on maintient le CO₂ sous 260 à 300 mbars.

5. Procédé selon la revendication 4, caractérisé en ce qu'on maintient le CO₂ sous 270 à 290 mbars.

6. Procédé selon la revendication 1, caractérisé en ce qu'on effectue l'extraction à une température de 60 à 70°C.

7. Procédé selon la revendication 1, caractérisé en ce qu'on utilise 2 à 20 kg de CO₂ par gramme de caféine à extraire du thé.

8. Procédé selon la revendication 7, caractérisé en ce qu'on utilise 3 à 10 kg de CO₂ par gramme de caféine à extraire du thé.

9. Procédé selon l'une des revendications précédentes, caractérisé en ce qu'on dispose le thé sous forme d'un cylindre creux et effectue l'extraction concentriquement en amenant le CO₂ non chargé à partir d'une surface du cylindre, en recueillant le CO₂ chargé derrière la surface de cylindre opposée et en le dirigeant sur du charbon actif.

10. Procédé selon la revendication 9, caractérisé en ce qu'on amène le CO₂ à partir de la surface extérieure du cylindre et le recueille dans l'espace vide du cylindre.

11. Procédé selon la revendication 10, caractérisé en ce que l'on dispose le charbon actif dans l'espace intérieur du cylindre creux.

12. Utilisation d'un dispositif caractérisé par un autoclave cylindrique (1) avec une arrivée d'agent d'extraction (2), un couvercle (3) et une sortie d'agent d'extraction (4), caractérisée par un récipient cylindrique de produit à extraire (5) inséré dans l'autoclave avec une enveloppe perforée (6) et un cylindre collecteur d'agent d'extraction perforé (7) disposé dans l'axe du cylindre qui est en communication d'écoulement avec la sortie d'agent d'extraction (4), pour la réalisation du procédé selon les revendications 1 à 11.

13. Utilisation selon la revendication 12, caractérisée en ce que le cylindre collecteur d'agent d'extraction perforé (7) est de conception tubulaire.

14. Utilisation selon la revendication 12 ou 13, caractérisée en ce que le cylindre collecteur d'agent d'extraction (7) comporte un remplissage de charbon actif.

15. Utilisation selon l'une des revendications 12 à 14, caractérisée en ce que le récipient de produit à extraire (5) présente un couvercle annulaire (8) à travers lequel s'étend le cylindre collecteur d'agent d'extraction (7).
